# EUROPÄISCHE PATENTANMELDUNG

(11) **EP 1 349 359 A1**
(43) Veröffentlichungstag der Anmeldung: **01.10.2003**
(21) Anmeldenummer: 02090124.5
(22) Anmeldetag: 27.03.2002
(51) Int. Cl.: H04M 15/00

(54) **Verfahren zum Vergebühren einer Kommunikationsverbindung zwischen Kommunikationsendgeräten**

(71) Anmelder: SIEMENS AKTIENGESELLSCHAFT, 80333 München (DE)
(72) Erfinder: Foell, Uwe, 14612 Falkensee (DE)

(57) **Zusammenfassung**

Die Erfindung betrifft ein Verfahren zum Vergebühren einer Kommunikationsverbindung (KV), die über das Internet (INET) zwischen einem ersten Kommunikationsendgerät (KEG) und einem mobilen Ziel-Kommunikationsendgerät (ZKEG) eines paketorientiert arbeitenden Mobilfunknetzes (MFN) aufgebaut wird.

Dabei wird von dem ersten Kommunikationsendgerät (KEG) aus eine die Kommunikationsverbindung (KV) betreffende Aufbauforderungsnachricht (AF) über das Internet (INET) zu einem Netzknoten (GW) des Mobilfunknetzes (MFN) geleitet, von dem Netzknoten wird ein Gebührenrechner (GS1) ermittelt, von welchem Gebühren-Zahlungsdaten gespeichert (M1) sind, von dem Netzknoten (GW) wird eine die Kommunikationsverbindung betreffende Gebührenanfrage (GA) an den Gebührenrechner (GS1) gesendet, von diesem wird überprüft, ob von Seiten des Kommunikationsendgerätes (KEG) die vollständige Kommunikationsverbindung betreffende Gebühren übernommen werden, und bei positivem Überprüfungsergebnis wird in dem Mobilfunknetz (MFN) die Kommunikationsverbindung (KV) zu dem Ziel-Kommunikationsendgerät (ZKEG) aufgebaut.

## Beschreibung

Zur Nutzung von Möglichkeiten des Internets werden Kommunikationsendgeräte (z.B. Computer, Laptops, PDAs oder Mobiltelefone) unter Nutzung verschiedener Techniken (z.B. Telefonwahlverbindung, Standleitung oder Satellitenanschluss) an das Internet angeschlossen. Mit der fortschreitenden Entwicklung von Mobilfunknetzen insbesondere der dritten Generation (GPRS = General Packet Radio Service, UMTS = Universal Mobile Telecommunications Service) werden in Zukunft verschiedenste Informationen von solchen Kommunikationsendgeräten zu mit Mobilfunknetzen verbundenen Zielkommunikationsendgeräten (z.B. Mobiltelefone, Laptops oder PDAs mit Mobilfunkschnittstelle) übertragen werden. Für die Nutzung von Mobilfunk-Ressourcen werden die Betreiber der Mobilfunknetze eine Bezahlung z.B. in Form von Kommunikationsgebühren verlangen.

Es ist Aufgabe der vorliegenden Erfindung, ein Verfahren anzugeben, mit dem in einer sicheren und zuverlässigen Art und Weise Kommunikationsverbindungen zwischen mit dem Internet verbundenen Kommunikationsendgeräten und mobilen Zielkommunikationsendgeräten vergebührt werden können.

Diese Aufgabe wird erfindungsgemäß gelöst durch ein Verfahren zum Vergebühren einer Kommunikationsverbindung, die über das Internet zwischen einem ersten Kommunikationsendgerät und einem mobilen Ziel-Kommunikationsendgerät eines paketorientiert arbeitenden Mobilfunknetzes aufgebaut wird, bei dem von dem ersten Kommunikationsendgerät aus eine die Kommunikationsverbindung betreffende Aufbauforderungsnachricht über das Internet zu einem Netzknoten des Mobilfunknetzes geleitet wird, von dem Netzknoten ein Gebührenrechner ermittelt wird, von welchem das erste Kommunikationsendgerät betreffende Gebühren-Zahlungsdaten gespeichert sind, von dem Netzknoten eine die Kommunikationsverbindung betreffende Gebührenanfrage an den Gebührenrechner gesendet wird, von dem Gebührenrechner überprüft wird, ob von Seiten des Kommunikationsendgerätes die mobilfunknetzseitige Kommunikationsverbindung betreffende Gebühren übernommen werden, von dem Gebührenrechner eine das Überprüfungsergebnis beinhaltende Antwortnachricht an den Netzknoten gesendet wird, bei positivem Überprüfungsergebnis in dem Mobilfunknetz die Kommunikationsverbindung zu dem Ziel-Kommunikationsendgerät aufgebaut wird, oder bei negativem Überprüfungsergebnis in dem Mobilfunknetz der Aufbau der Kommunikationsverbindung abgebrochen wird.

Hierbei ist insbesondere vorteilhaft, dass bereits vor dem Aufbau der Kommunikationsverbindung in dem Mobilfunknetz zu dem Zielkommunikationsendgerät von dem Gebührenrechner festgestellt wird, ob das Kommunikationsendgerät bzw. dessen Betreiber für die anfallenden Gebühren aufkommen werden. Die für diese Feststellung oder Überprüfung notwendigen Informationen können in den Gebührenzahlungsdaten gespeichert sein, wobei die Gebührenzahlungsdaten beispielsweise aufgrund eines Vertrages zwischen dem Betreiber des Kommunikationsendgerätes und einem Betreiber des Gebührenrechners erstellt und abgespeichert wurden. Das Verfahren betrifft insbesondere Gebühren für die mobilfunknetzseitige Kommunikationsverbindung. Darunter ist jener Teil der Kommunikationsverbindung zu verstehen, welcher sich in dem Mobilfunknetz befindet bzw. welcher in dem Mobilfunknetz Aufwand verursacht.

Das erfindungsgemäße Verfahren kann so ausgestaltet sein, dass als Netzknoten ein das Internet mit dem Mobilfunknetz verbindender Verbindungsknoten verwendet wird. Der Verbindungsknoten (Gateway) stellt also einen "Eingangsknoten" oder "ersten Knoten" des Mobilfunknetzes dar. Hierbei ist insbesondere vorteilhaft, dass von dem Verbindungsknoten die Überprüfung der Gebührenbehandlung durch den Gebührenrechner schon zu einem Zeitpunkt veranlasst wird, wenn die Aufbauforderungsnachricht erstmalig das Mobilfunknetz erreicht. Sollte die Überprüfung zu einem negativen Ergebnis führen (nämlich beispielsweise dazu, dass seitens des Kommunikationsendgerätes keine Gebühren getragen werden), so wird schon bei dem Verbindungsknoten der Aufbau der Kommunikationsverbindung im Mobilfunknetz abgebrochen und die Ressourcen des Mobilfunknetzes werden vorteilhafterweise nicht unnötig belastet.

Das erfindungsgemäße Verfahren kann auch so ausgestaltet sein, dass als Netzknoten ein Element eines verbindungsaufbausteuernden Datenpaketsteuerungssystems verwendet wird.

Bei dem erfindungsgemäßen Verfahren kann das erste Kommunikationsendgerät über ein Internet-Zugangsnetz mit dem Internet verbunden werden. Dadurch können vorteilhafterweise auch solche Kommunikationsendgeräte an dem erfindungsgemäßen Verfahren teilnehmen, welche nicht direkt an das öffentliche Internet angeschlossen sind, sondern bei welchen der Zugang zu dem Internet über ein oder mehrere zwischengeschaltete Zugangsnetze erfolgt.

Erfindungsgemäß kann bei dem Verfahren als Gebührenrechner ein Netz-Rechner des Internetzugangsnetzes verwendet werden. Vorteilhafterweise kann es sich bei einem derartigen Netz-Rechner um einen Rechner handeln, der sowieso im Internetzugangsnetz vorhanden ist (beispielsweise für die Abrechnung von Kosten zwischen dem Kommunikationsendgerät und einem Betreiber des Internetzugangsnetzes, also z.B. für die Abrechnung des Zugangs des Kommunikationsendgerätes zum Internet). Dadurch braucht vorteilhafterweise für das erfindungsgemäße Verfahren kein eigener Gebührenrechner installiert zu werden, sondern ein bereits vorhandener Netz-Rechner kann zur Bearbeitung einer weiteren Aufgabe herangezogen werden. Dies ermöglicht eine sehr kostengünstige und aufwandsarme Gestaltung des erfindungsgemäßen Verfahren.

Bei dem erfindungsgemäßen Verfahren kann auch als Gebührenrechner ein Netz-Rechner des Mobilfunknetzes verwendet werden. Eine derartige Ausgestaltung des erfindungsgemäßen Verfahrens ist insbesondere deshalb vorteilhaft, weil die Kommunikation zwischen dem Verbindungsknoten und dem Netz-Rechner des Mobilfunknetzes innerhalb des Mobilfunknetzes stattfindet. Dadurch kann eine besonders sichere oder abhörgeschützte Datenübertragung ermöglicht werden, was einerseits den hohen Sicherheitsanforderungen bei Vergebührungsverfahren Rechnung trägt und andererseits den Datenschutz in besonders ausgeprägtem Maße gewährleistet. Der Netz-Rechner kann beispielsweise in dem Datenpaketsteuerungssystem angeordnet sein.

Bei dem erfindungsgemäßen Verfahren kann aber auch als Gebührenrechner ein Internet-Rechner des Internets verwendet werden. Hierbei ist es vorteilhafterweise möglich, einen im Internet vorhandenen Internet-Server als Gebührenrechner heranziehen. Dazu können beispielsweise die Dienste eines Dienstanbieters des Internets genutzt werden. Dadurch lässt sich das Verfahren kostengünstiger realisieren als bei Installation eines eigenen Gebührenrechners.

Das erfindungsgemäße Verfahren kann so ablaufen, dass mittels der Antwortnachricht die Information an den Netzknoten gesendet wird, dass seitens des ersten Kommunikationsendgerätes sämtliche Gebühren übernommen werden, welche im Zusammenhang mit der Kommunikationsverbindung auftreten, diese Gebühren betreffende Gebührendaten bei dem Gebührenrechner erfasst werden, und durch den Gebührenrechner eine Gebührenzahlung von einem Betreiber des Kommunikationsendgerätes an einen Betreiber des Mobilfunknetzes veranlasst wird. Bei einem derartigen Verfahrensablauf wird vorteilhafterweise dem Verbindungsknoten die Information übermittelt, dass sämtliche für die Kommunikationsverbindung anfallenden Gebühren von Seiten des ersten Kommunikationsendgerätes übernommen werden. Dadurch ist vorteilhafterweise für den Verbindungsknoten keine Überwachung der Gebühren (z.B. auf die Höhe der angefallenen Gebühren hin) notwendig, so dass diesbezüglich ein einfacher Verfahrensablauf gewährleistet ist.

Das erfindungsgemäße Verfahren kann aber auch so ablaufen, dass mittels der Antwortnachricht die Information an den Netzknoten gesendet wird, dass seitens des ersten Kommunikationsendgerätes Gebühren, welche im Zusammenhang mit der Kommunikationsverbindung auftreten, bis zu einer vorgewählten Maximalhöhe übernommen werden, diese Gebühren betreffende Gebührendaten bei dem Gebührenrechner erfasst werden, und durch den Gebührenrechner eine Gebührenzahlung von einem Betreiber des Kommunikationsendgerätes an einen Betreiber des Mobilfunknetzes veranlasst wird. Dabei ist insbesondere vorteilhaft, dass durch die Überwachung der Maximalhöhe (welche einen Schwellwert bzw. ein Limit darstellt), eine weitergehende Kontrolle der Gebühren erfolgen kann.

Das Verfahren kann dabei so ablaufen, dass die Kommunikationsverbindung beendet wird, wenn eine in den erfassten Gebührendaten enthaltene Gebührenhöhe die Maximalhöhe erreicht. Damit kann vorteilhafterweise sicher vermieden werden, dass die Kommunikationsverbindung weiter aufrechterhalten wird, wenn keine Gebührenzahlung von Seiten des Kommunikationsendgeräts mehr erfolgt.

Das Verfahren kann auch so ablaufen, dass, sobald eine in den erfassten Gebührendaten enthaltene Gebührenhöhe die Maximalhöhe erreicht, eine zusätzliche Gebührenzahlung veranlasst wird und danach eine erneute, bei der Gebührenhöhe Null startende Erfassung der Gebührendaten begonnen wird. Die zusätzlich veranlaßte Gebührenzahlung stellt vorteilhafterweise sicher, dass sich keine unbeabsichtigt hohen Gebührenbeträge (z.B. durch sehr lange Kommunikationsverbindungen) aufsummieren.

Das erfindungsgemäße Verfahren kann auch so ablaufen, dass mittels der Antwortnachricht die Information an den Netzknoten gesendet wird, dass seitens des ersten Kommunikationsendgerätes ein Gebührenanteil der Gebühren übernommen wird, welche im Zusammenhang mit der Kommunikationsverbindung auftreten, diesen Gebührenanteil betreffende Gebührendaten bei dem Gebührenrechner erfasst werden, und durch den Gebührenrechner eine Gebührenzahlung von einem Betreiber des Kommunikationsendgerätes an einen Betreiber des Mobilfunknetzes veranlasst wird. Bei einem derartigen Verfahrensablauf wird vorteilhafterweise die Möglichkeit eröffnet, dass ein Kommunikationsendgerät nur einen Teil der Kommunikationsgebühren trägt (z.B. 50 Prozent). Der restliche Gebührenanteil kann dann beispielsweise von dem Zielkommunikationsendgerät oder auch von dem Betreiber des Internetzugangsnetzes getragen werden.

Bei dem erfindungsgemäßen Verfahren können in einem Speicher des Mobilfunknetzes weitere Gebührendaten erfasst werden, um bei der veranlassten Gebührenzahlung durch Vergleich der im Gebührenrechner erfassten Gebührendaten und der in dem Speicher des Mobilfunknetzes erfassten weiteren Gebührendaten Gebührenzahlungsvorgänge zu überprüfen. Dadurch wird vorteilhafterweise die Sicherheit des Vergebührungsverfahrens deutlich erhöht, da durch den Vergleich der Gebührendaten z.B. Kommunikationsfehler, eine fehlerhafte Datenübertragung oder auch betrügerische Manipulationsversuche erkannt werden können.

Das erfindungsgemäße Verfahren kann so ablaufen, dass bei der veranlassten Gebührenzahlung eine Aufteilung der Gebühren auf den Betreiber des Gebührenrechners und den Betreiber des Mobilfunknetzes durchgeführt wird. Vorteilhafterweise braucht dann nur eine Zahlung eines Gebührenbetrages bei dem Kommunikationsendgerät veranlasst werden, wohingegen die Aufteilung des Gebührenbetrages auf die beiden Betreiber verfahrensintern erfolgt, so dass für das Kommunikationsendgerät kein zusätzlicher Aufwand für die Aufteilung entsteht.

Das erfindungsgemäße Verfahren kann so ablaufen, dass vor dem Senden der Antwortnachricht von Seiten des Gebührenrechners das Senden einer die Gebühren betreffenden Informationsnachricht an das erste Kommunikationsendgerät veranlasst wird, seitens des ersten Kommunikationsendgeräts der Empfang der Informationsnachricht mittels einer Bestätigungsnachricht bestätigt wird, und nach Eintreffen der Bestätigungsnachricht von Seiten des Gebührenrechners die Antwortnachricht an den Netzknoten gesendet wird. Vorteilhafterweise wird hierbei das Kommunikationsendgerät vor Aufbau der Kommunikationsverbindung von dem beabsichtigen Aufbau informiert. Da der Aufbau der Kommunikationsverbindung erst nach Empfang der Bestätigungsnachricht (die eine Zustimmung zum Aufbau der Kommunikationsverbindung darstellen kann) erfolgt, kann ein unbeabsichtigter oder fehlerhafter Aufbau der Kommunikationsverbindung (verbunden mit unnötiger Ressourcenbelastung) sicher vermieden werden.

Die soeben genannte Variante des Verfahrens kann auch dadurch ergänzt werden, dass zusammen mit der Informationsnachricht eine die Gebühren betreffende Wahlaufforderung an das erste Kommunikationsendgerät gesendet wird, von Seiten des ersten Kommunikationsendgeräts auf die Wahlaufforderung hin eine Auswahl getroffen wird, und Informationen über die getroffene Auswahl mittels der Bestätigungsnachricht an den Gebührenrechner übertragen werden. Dadurch wird dem Kommunikationsendgerät vorteilhafterweise die Möglichkeit eröffnet, zwischen verschiedenen die Kommunikationsverbindung betreffenden Alternativen auszuwählen. Derartige Alternativen können zum Beispiel durch verschiedene anzuwendende Gebührensätze gegeben sein. Eine Alternative wäre aber zum Beispiel auch der Abbruch des Verfahrens, um Kommunikationsgebühren zu vermeiden.

Zur weitergehenden Erläuterung ist in
- Figur 1: schematisch ein Ausführungsbeispiel von Abläufen des erfindungsgemäßen Verfahrens, in
- Figur 2: eine schematische Darstellung eines weiteren Ausführungsbeispiels des erfindungsgemäßen Verfahrens und in
- Figur 3: eine schematische Darstellung eines weiteren Ausführungsbeispiels des erfindungsgemäßen Verfahrens dargestellt.

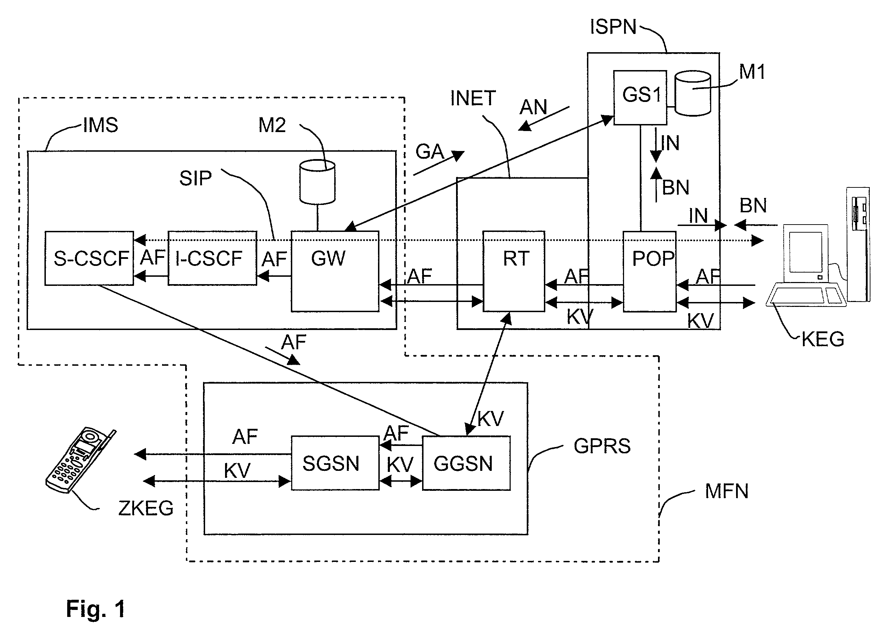

In Figur 1 ist auf der rechten Seite ein Kommunikationsendgerät KEG in Form eines Rechners (beispielsweise eines Personalcomputers) dargestellt. Dieses Kommunikationsendgerät KEG ist mit einem Internetzugangsnetz ISPN (ISPN = Internet Service Provider Network) eines Internetzugangsdienstleisters ISP (ISP = Internet Service Provider) verbunden. Das Internetzugangsnetz ISPN seinerseits ist mit dem Internet INET verbunden. Von dem Internet INET ist lediglich schematisch ein einziger Vermittlungsrechner RT (RT = Router) dargestellt. Selbstverständlich befinden sich im Internet noch eine große Anzahl weiterer Vermittlungsrechner und an diese weiteren Vermittlungsrechner angeschlossene Internetrechner. An das Internet anschließend ist in schematischer Darstellung ein Ausschnitt aus einem Mobilfunknetz MFN dargestellt. Dieser Ausschnitt beinhaltet ein Datenpaketsteuerungssystem IMS (IMS = IP Multimedia Subsystem, IP = Internet Protocol). Das Datenpaketsteuerungssystem IMS ist verbunden mit einem Datenübertragungssystem GPRS. In diesem Ausführungsbeispiel ist also ein Mobilfunknetz der dritten Generation dargestellt, welches nach GPRS-Vorgaben arbeitet (GPRS = General Packet Radio System). Mit dem Mobilfunknetz MFN verbunden ist schließlich ein Zielkommunikationsendgerät ZKEG dargestellt; in diesem Fall handelt es sich um ein Mobiltelefon.

Ein Datenpaketsteuerungssystem IMS dient allgemein der paketbasierten Multimedia-Steuerung für mobile Kommunikationsnetze. Das Steuerungssystem IMS ermöglicht es, Multimedia-Dienste sowohl für die mobilen Zugangsnetze als auch für das Internet bereitzustellen. Die Steuerungsfunktionen erfolgen unter Nutzung eines "Session Initiation Protocol" (SIP) genannten Protokolls. Dieses generische Protokoll kann dabei sowohl verwendet werden zur Steuerung des Verbindungsaufbaus von Teilnehmern innerhalb des Mobilfunknetzes als auch des Verbindungsaufbaus zwischen Teilnehmern des Mobilfunknetzes und Teilnehmern des Internets. Die Steuerung der Verbindungen erfolgt dabei über eine sogenannte "Call State Control Function" (CSCF), welche eine Komponente des Steuerungssystems IMS darstellt.

Es soll nun eine Kommunikationsverbindung zwischen dem Kommunikationsendgerät KEG und dem Zielkommunikationsendgerät ZKEG aufgebaut werden. Zu diesem Zweck sendet das Kommunikationsendgerät eine Aufbauforderungsnachricht AF ab, welche an das Mobilfunknetz MFN geleitet wird. Diese Aufbauforderungsnachricht AF gelangt zuerst zu einem Zugangsknoten POP des Internetzugangsnetzes ISPN. Der Zugangsknoten POP (POP = Point of Presence) ist eine Schnittstelle, über die externe Endgeräte Kontakt mit dem Internetzugangsnetz ISPN aufnehmen. Die Aufbauforderungsnachricht AF wird unverändert (transparent) von dem Zugangsknoten POP weitergeleitet an den Vermittlungsrechner RP des Internets INET.

In der Aufbauforderungsnachricht AF enthalten sind Informationen über den Absender der Aufbauforderungsnachricht AF (also über das Kommunikationsendgerät KEG), über die aufzubauende Kommunikationsverbindung und über das Ziel der aufzubauenden Kommunikationsverbindung, in diesem Falle stellt das Zielkommunikationsendgerät ZKEG das Ziel der Kommunikationsverbindung dar.

Aufgrund der mit der Aufbauforderungsnachricht AF übertragenen Informationen ermittelt der Vermittlungsrechner RT das Mobilfunknetz MFN, welches für das Zielkommunikationsendgerät ZKEG zuständig ist. Dies kann durch Abfrage bei einem zentralen Datenspeicher (z.B. einem Domain Name Server DNS) erfolgen. Bei dem Mobilfunknetz MFN kann es sich beispielsweise um das dem Zielkommunikationsendgerät ZKEG zugeordnete Heimat-Mobilfunknetz handeln. Der Vermittlungsrechner RT sendet die Aufbauforderungsnachricht AF unverändert (transparent) an einen Verbindungsknoten GW (GW = Gateway) des Mobilfunknetzes weiter. Dieser Verbindungsknoten GW bildet eine Kommunikations-Schnittstelle zwischen dem Mobilfunknetz MFN und dem Internet INET. In diesem Falle stellt der Verbindungsknoten GW ein Element des verbindungsaufbausteuernden Datenpaketsteuerungssystems IMS dar.

Der Verbindungsknoten GW erkennt aus der Aufbauforderungsnachricht AF, dass eine Kommunikationsverbindung zwischen dem Kommunikationsendgerät KEG und dem Zielkommunikationsendgerät ZKEG aufgebaut werden soll. Dabei wird das Kommunikationsendgerät KEG als Absender der Aufbauforderungsnachricht AF, also als Initiator der Kommunikationsverbindung, erkannt. Der Verbindungsknoten erkennt ebenfalls, dass die Aufbauforderungsnachricht AF über das Internet INET übertragen wurde; dass die Kommunikationsanfrage also aus dem Internet stammt. Damit ist bekannt, dass die aufzubauende Kommunikationsverbindung von einem an das Internet INET angeschlossene Kommunikationsendgerät KEG über das Internet INET über das Mobilfunknetz MFN zu dem Zielkommunikationsendgerät ZKEG aufgebaut werden soll. Der Verbindungsknoten GW ermittelt nun, welcher Gebührenrechner für das Kommunikationsendgerät KEG zuständig ist. Diese Ermittlung eines Gebührenrechners kann auf verschiedene Arten erfolgen:
1. Im Verbindungsknoten GW ist eine Liste aller bekannten Gebührenrechner gespeichert. Durch Auswertung einer Absenderinformation des Kommunikationsendgerätes KEG (welche mit der Aufbauforderungsnachricht AF mit übertragen wurde, beispielsweise die IP-Adresse des Rechners KEG) wird der für das Kommunikationsendgerät KEG zuständige Gebührenrechner gefunden.
2. Der Verbindungsknoten stellt unter Nennung der Absenderinformation des Kommunikationsendgerätes KEG bei einem zentralen Adressen-Server (beispielsweise bei dem Server DNS = Domain Name Server) des öffentlichen Internets eine Anfrage; von dem zentralen Adressen-Server wird daraufhin die Adresse des zuständigen Gebührenrechners übermittelt.
3. Die Adresse des zuständigen Gebührenrechners wird mittels einer nach dem "Session Initiation Protocol" SIP aufgebauten Nachricht (z.B. der SIP-Nachricht INVITE) zu dem Verbindungsknoten GW transportiert.
4. Der Verbindungsknoten GW fragt bei dem Internetzugangsnetz ISPN nach der Adresse des zuständigen Gebührenservers an; das Internetzugangsnetz ISPN übermittelt daraufhin die gewünschte Adresse an den Verbindungsknoten GW.

Der Gebührenrechner ist bezüglich des ersten Kommunikationsendgerätes KEG eine zentrale Einheit, d.h. im Regelfall gibt es für jedes Kommunikationsendgerät KEG einen zuständigen Gebührenrechner. Im Unterschied dazu kann es für jedes Kommunikationsendgerät KEG mehrere verschiedene Verbindungsknoten GW geben. Welcher Verbindungsknoten im jeweiligen Einzelfall genutzt wird, kann dann davon abhängig sein, auf welchem Weg das Kommunikationsendgerät Verbindung mit dem Mobilfunknetz aufnimmt.

Der Verbindungsknoten GW ermittelt nun beispielsweise nach der oben unter Punkt 1 genannten Methode die Adresse des in diesem Falle zuständigen Gebührenrechners GS1. Der Gebührenrechner GS1 ist an das Internetzugangsnetz ISPN angeschlossen bzw. stellt ein Teil dieses Zugangsnetzes dar. In dem Gebührenrechner GS1 bzw. in einem an den Gebührenrechner GS1 angeschlossenen ersten Speicher M1 sind als Gebührenzahlungsdaten Informationen über das Kommunikationsendgerät KEG gespeichert. Diese Informationen betreffen die Art und Weise, wie und ob seitens des Kommunikationsendgerätes KEG Kommunikationsgebühren für in einem Mobilfunknetz aufzubauende Kommunikationsverbindungen behandelt werden. Beispielsweise kann durch einen bereits vor Verfahrensbeginn abgeschlossenen Vertrag zwischen einem Betreiber des Kommunikationsendgerätes und einem Betreiber des Internetzugangsnetzes festgelegt worden sein, dass von Seiten des Kommunikationsendgerätes KEG sämtliche beim Aufbau von Kommunikationsverbindungen anfallende Kommunikationsgebühren übernommen und bezahlt werden. Für den eigentlichen Bezahlungsvorgang sind dabei verschiedenste Möglichkeiten denkbar. Beispielsweise kann jeweils am Ende einer Abrechnungsperiode eine Rechnung an den Betreiber Kommunikationsendgerätes KEG gesendet werden, woraufhin dieser gesammelt sämtliche angefallenen Gebühren begleicht. In diesem Falle würde es sich um eine sogenannte Postpaid-Vergebührung handeln. Die Gebühren können aber auch in einem sogenannten Prepaid-Verfahren abgerechnet werden. Für das Prepaid-Verfahren würde z.B. bei dem Gebührenrechner GS1 ein Guthabenkonto für das Kommunikationsendgerät KEG eingerichtet werden und auf diesem Guthabenkonto würden Informationen über einen vorausbezahlten Guthabenbetrag abgespeichert sein. Für Kommunikationsverbindungen auftretende Kommunikationsgebühren könnten dann sofort bei Entstehung (online, in Echtzeit) von dem Guthabenkonto abgebucht werden. Neben diesen Beispielen für den eigentlichen Bezahlvorgang sind aber auch sämtliche weitere denkbare Bezahlvarianten anwendbar, beispielsweise können dafür Banken oder Kreditkartenorganisationen genutzt werden.

Von dem Verbindungsknoten GW wird nun eine Gebührenanfrage GA zu dem ermittelten Rechner GS1 gesendet. Mittels dieser Gebührenanfragenachricht GA wird bei dem Gebührenrechner GS1 angefragt, ob beim Gebührenrechner GS1 Informationen über die Art und Weise der Gebührenbehandlung (z.B. Gebührenzahlung) des Kommunikationsendgerätes KEG betreffender Gebühren vorliegt. Der Gebührenrechner GS1 liest nun beispielsweise aus den in dem ersten Speicher M1 gespeicherten Gebühren-Zahlungsdaten aus, dass das Kommunikationsendgerät KEG sämtliche im Zusammenhang mit Kommunikationsverbindungen auftretende Gebühren übernimmt. Der Gebührenrechner GS1 stellt also fest, dass von Seiten des Kommunikationsendgerätes KEG die vollständige Kommunikationsverbindung KV betreffende Gebühren übernommen werden. Diese Information wird mittels einer Antwortnachricht AN zu dem Verbindungsknoten GW zurückgesendet. Aufgrund dieser Antwortnachricht AN (die ein positives Überprüfungsergebnis des Gebührenrechners GS1 darstellt) veranlasst nun der Verbindungsknoten GW den weiteren, vollständigen Aufbau der Kommunikationsverbindung KV in dem Mobilfunknetz bis hin zu dem Zielkommunikationsendgerät ZKEG.

Bei einem weiteren Ausführungsbeispiel kann jedoch abweichend von dem soeben beschriebenen Verlauf ein weiterer Verfahrensverlauf auftreten:
Nach Empfang der Gebührenanfrage GA fragt der Gebührenrechner GS1 seine Datenbank M1 das Kommunikationsendgerät KEG betreffend ab. In der Datenbank M1 sind jedoch keine das Kommunikationsendgerät KEG betreffenden Gebühren-Zahlungsdaten gespeichert. Daraufhin sendet der Gebührenrechner GS1 eine Informationsnachricht IN über den Zugangsknoten POP an das Kommunikationsendgerät KEG. Diese Informationsnachricht IN enthält Informationen über die aufzubauende Kommunikationsverbindung KV und/oder über diese Kommunikationsverbindung KV betreffende Gebühren. Nach Empfang der Informationsnachricht IN mit den übertragenen Informationen kann beispielsweise auf einem Bildschirmfenster des Rechners KEG ein Text in der folgenden Form dargestellt werden:
"Verbindungsaufbau zu dem Mobiltelefon mit der Telefonnummer 0049 0171 1234567. Was möchten Sie tun?
1. Verbindung aufbauen: Pauschalpreis 10 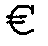
2. Verbindung aufbauen: volumenabhängiger Preis 0,50 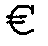 pro MB
3. Verbindungsaufbau abbrechen"

Auf Seiten des Kommunikationsendgerätes KEG kann nun auf diese Wahlaufforderung hin eine Auswahl getroffen werden. Dies kann automatisch geschehen aufgrund von in dem Kommunikationsendgerät gespeicherten Vorgaben. Diese Auswahl kann aber auch erfolgen nach beispielsweise einer Tastatureingabe bei dem Kommunikationsendgerät KEG. Informationen über die getroffene Auswahl werden daraufhin mittels einer Bestätigungsnachricht BN über den Zugangsknoten POP zu dem Gebührenrechner GS1 zurückübertragen. Der Gebührenrechner GS1 speichert die Information über die getroffene Auswahl und sendet diese Informationen mittels einer Antwortnachricht AN an den Verbindungsknoten weiter.

Eine weitere Ausgestaltung des erfindungsgemäßen Verfahrens kann vorsehen, dass von dem Kommunikationsendgerät KEG die Inhalte der Informationsnachricht IN zur späteren Weiterverarbeitung gespeichert werden (beispielsweise in einer Log-Datei) und dass daraufhin sofort eine Bestätigungsnachricht BN an den Gebührenrechner GS1 zurückgesendet wird. Daraufhin sendet dieser Gebührenrechner GS1 wieder die Antwortnachricht an den Verbindungsknoten GW.

Die beschriebenen Verfahrensschritte bezüglich der Informationsnachricht IN und der Bestätigungsnachricht BN können selbstverständlich auch dann ablaufen, wenn in dem Gebührenrechner GS1 Gebühren-Zahlungsdaten gespeichert sind.

In all den vorgenannten Varianten liegt nun beim Verbindungsknoten GW das (positive) Überprüfungsergebnis des Gebührenrechners GS1 vor; der Verbindungsknoten GW veranlasst nun den weiteren Aufbau der Kommunikationsverbindung KV innerhalb des Mobilfunknetzes. Dazu sendet der Verbindungsknoten GW die Aufbauforderungsnachricht AF weiter an eine erste Steuerungseinheit I-CSCF (I-CSCF = Interrogating Call State Control Function). Die erste Steuerungseinheit I-CSCF ermittelt eine zweite Steuerungseinheit S-CSCF (S-CSCF = Serving Call State Control Function), die für die Kommunikationsverbindung zuständig ist, und leitet die Aufbauforderungsnachricht AF unverändert zu der zweiten Steuerungseinheit S-CSCF weiter. Diese zweite Steuerungseinheit S-CSCF ermittelt nun, welche Vermittlungsstelle in dem Mobilfunknetz MFN zuständig ist für die Herstellung der Kommunikationsverbindung zwischen dem Kommunikationsendgerät KEG und dem Zielkommunikationsendgerät ZKEG. Nachdem seitens der zweiten Steuerungseinheit S-CSCF eine erste Vermittlungsstelle GGSN des Mobilfunknetzes als zuständige Vermittlungsstelle ermittelt wurde, sendet die zweite Steuereinheit S-CSCF die Aufbauforderungsnachricht AF über diese erste Vermittlungsstelle GGSN, über eine zweite Vermittlungsstelle SGSN in herkömmlicher Art und Weise an das Zielkommunikationsendgerät ZKEG. Nun ist sowohl bei dem Zielkommunikationsendgerät ZKEG als auch bei dem Kommunikationsendgerät KEG bekannt, dass die Kommunikationsverbindung KV zwischen den beiden Endgeräten aufgebaut werden soll. Daraufhin wird von dem Kommunikationsendgerät KEG über den Zugangsknoten POP, den Vermittlungsrechner RT, die erste Vermittlungsstelle GGSN und die zweite Vermittlungsstelle SGSN in herkömmlicher Art und Weise eine Kommunikationsverbindung zu dem Zielkommunikationsendgerät ZKEG aufgebaut. Über diese Kommunikationsverbindung KV können nun beliebige Daten übertragen werden. Bei diesen Daten kann es sich beispielsweise handeln um Sprach-Daten wie VoIP-Pakete (VoIP = Voice over IP), um E-Mail-Daten, um Bilddaten, Film-Daten oder Ton-Daten. Bei der Datenübertragung auftretende Gebührendaten (z.B. Daten über Zeitdauer oder Zeitpunkt der Datenübertragung oder über die Datenkapazität der übertragenen Daten) werden bei dem Gebührenrechner GS1 (in diesem Falle also im Internetzugangsnetz ISPN) erfasst. Mit Hilfe dieser Gebührendaten wird sofort (bei Prepaid-Abrechnungsverfahren) oder später (bei Postpaid-Abrechnungsverfahren) eine Gebührenübernahme des Betreibers des Kommunikationsendgerätes KEG zugunsten eines Betreibers des Mobilfunknetzes MFN veranlasst.

Optional können in einer Speichereinheit des Mobilfunknetzes (beispielsweise in einem zweiten Speicher M2) weitere die Kommunikationsverbindung KV betreffende Gebührendaten erfasst und abgespeichert werden. Mittels dieser weiteren Gebührendaten kann bei der veranlassten Gebührenübernahme/Gebührenzahlung ein Vergleich zwischen den im Gebührenrechner erfassten Gebührendaten und den im Speicher des Mobilfunknetzes erfassten weiteren Gebührendaten vorgenommen werden. Mittels dieses Vergleiches kann festgestellt werden, ob die Gebührenzahlung korrekt abgewickelt wird. Ergeben sich zwischen den Gebührendaten und den weiteren Gebührendaten Unterschiede, so kann eine Fehlerbehandlung ausgelöst werden.

Die veranlasste Gebührenzahlung kann im Detail so ablaufen, dass von dem Gebührenrechner GS1 eine einzige Gebührenzahlungsnachricht an das Kommunikationsendgerät KEG gesendet wird, daraufhin von dem Kommunikationsendgerät KEG eine einzige Gebührenzahlung an einen Betreiber des Gebührenrechners GS1 vorgenommen wird. Von Seiten des Gebührenrechners GS1 kann der so erhaltene Gebührenbetrag aufgeteilt werden, z.B. kann ein Teil des Gebührenbetrages beim Betreiber des Gebührenrechners GS1 verbleiben und ein anderer Teil des Gebührenbetrages an den Betreiber des Mobilfunknetzes MFN weitergeleitet werden.

Wenn mittels der Antwortnachricht AN die Information an den Verbindungsknoten GW gesendet wurde, dass seitens des ersten Kommunikationsendgerätes KEG lediglich ein Gebührenanteil der auftretenden Gebühren übernommen wird, dann werden diesen Gebührenanteil betreffende Gebührendaten bei dem Gebührenrechner GS1 erfasst und gespeichert; dementsprechend wird durch die Gebührenrechner eine Gebührenzahlung seitens des Kommunikationsendgerätes KEG veranlasst, welche diesen Gebührenanteil umfasst.

Das Verfahren kann aber auch so ablaufen, dass mittels der Antwortnachricht AN die Information an den Verbindungsknoten GW gesendet wird, dass seitens des ersten Kommunikationsendgerätes KEG nur solche Gebühren übernommen werden, welche eine bestimmte Maximalhöhe nicht überschreiten. Der Gebührenrechner erfasst dann Gebührendaten nur für Gebühren bis zu dieser Maximalhöhe. Ist dieses vorgegebene Gebührenlimit erreicht, dann veranlaßt der Gebührenrechner eine (außerplanmäßige) Gebührenzahlung, setzt danach einen zur Erfassung benutzten Gebührenzähler zurück und beginnt eine "neue" Erfassung der nun auflaufenden Gebühren. Als eine weitere Alternative kann bei Erreichen der Maximalgebührenhöhe auch die Kommunikationsverbindung getrennt werden.

Bei dem bisher im Zusammenhang mit der Figur 1 beschriebenen Ausführungsbeispiel werden die die Kommunikationsverbindung KV betreffende Gebühren also durch den Gebührenrechner GS1 des Internet Service Providers ISP erhoben.

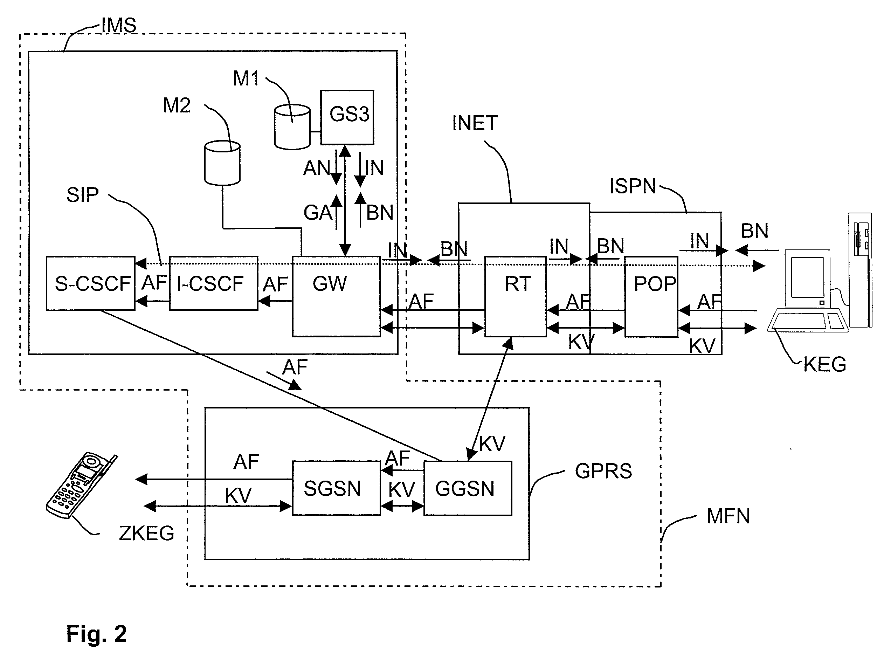

In Figur 2 ist ein weiteres Ausführungsbeispiel dargestellt, bei dem die Gebühren durch einen Netz-Rechner GS3 des Mobilfunknetzes MFN erhoben werden. Der Netz-Rechner GS3 bildet also einen Gebührenrechner, welcher in dem Mobilfunknetz MFN angeordnet und mit dem Verbindungsknoten GW des Mobilfunknetzes MFN verbunden ist. Dies hat den Vorteil, dass die Kommunikation zwischen dem Verbindungsknoten GW und dem Gebührenrechner GS3 vollständig innerhalb des Mobilfunknetzes MFN abläuft, dadurch ist eine besonders sichere Datenübertragung zwischen den beiden Mobilfunknetzelementen gewährleistet. Im Unterschied zu dem im Zusammenhang mit der Figur 1 erläuterten Verfahrensbeispiel wird von dem Verbindungsknoten GW die Gebührenanfrage GA mobilfunknetzintern an den Netzrechner GS3 gesendet. Von dem Netzrechner GS3 wird die Antwortnachricht AN ebenfalls mobilfunknetzintern an den Verbindungsknoten GW zurückgesendet. Von dem Gebührenrechner GS3 wird die Informationsnachricht IN über den Verbindungsknoten GW, den Vermittlungsrechner RT, den Zugangsknoten POP an das erste Kommunikationsendgerät KEG gesendet; das erste Kommunikationsendgerät KEG sendet die Bestätigungsnachricht BN über den Zugangsknoten POP, die Vermittlungsstelle RT und den Gateway-Knoten GW an den als Gebührenrechner arbeitenden Internetrechner GS3 zurück.

Die weiteren Verfahrensschritte entsprechen den im Zusammenhang mit der Figur 1 erläuterten Schritten. Diese Ausgestaltungsform des erfindungsgemäßen Verfahrens hat den Vorteil, dass die Vergebührung der Kommunikationsverbindung innerhalb des Mobilfunknetzes MFN durchgeführt wird; es brauchen keine "fremden" Netzeinheiten (wie z.B. der Gebührenrechner GS1 in Figur 1) mit Vergebührungsaufgaben belastet werden. Außerdem können netzübergreifende Datenübertragungen (zwischen dem Mobilfunknetz MFN und dem Internetzugangsnetz ISPN) vermieden werden; dadurch können Kosten eingespart werden.

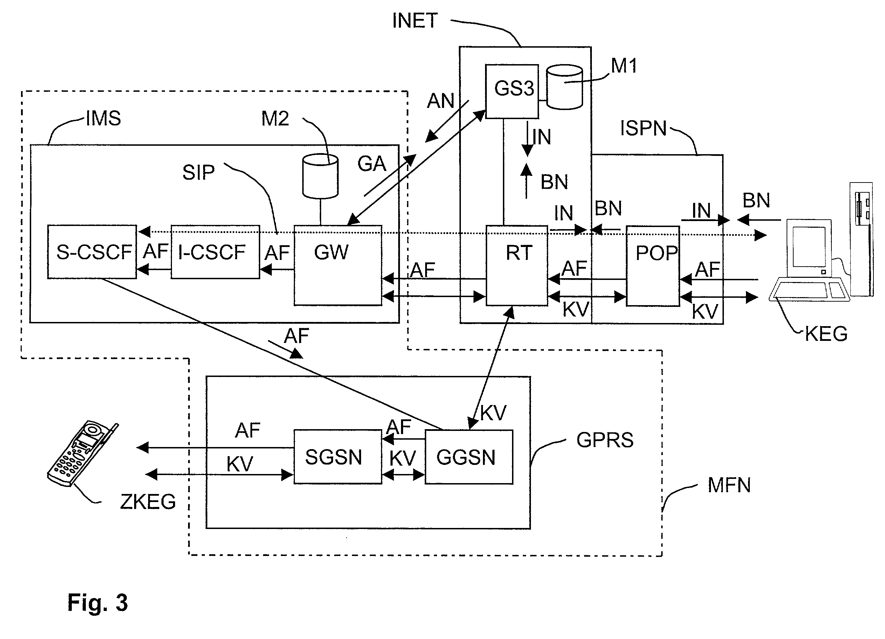

In Figur 3 ist ein weiteres Ausführungsbeispiel des erfindungsgemäßen Verfahrens dargestellt. In diesem Beispiel wird als Gebührenrechner ein Internetrechner GS2 des Internets verwendet. Dieser Internetrechner GS2 kann beispielsweise von einem Diensteanbieter des Internets betrieben werden, welcher für verschiedenste Kunden seine Gebührenabrechnungsdienste anbietet. Im Unterschied zu den im Zusammenhang mit Figur 1 beschriebenen Verfahrensschritten sendet der Verbindungsknoten GW die Gebührenanfrage GA an den Internetrechner GS2 des Internets INET; aus dem Internet INET wird die Antwortnachricht AN an den Verbindungsknoten GW des Mobilfunknetzes zurückgesendet. Von dem Internetrechner GS2 wird die Informationsnachricht IN über den Vermittlungsrechner RT und den Zugangsknoten POP an das erste Kommunikationsendgerät KEG gesendet; analog dazu wird die Bestätigungsnachricht BN von dem ersten Kommunikationsendgerät KEG über den Zugangsknoten POP und den Vermittlungsrechner RT an den Internetrechner GS2 zurückgesendet. Die weiteren Verfahrensschritte entsprechen den im Zusammenhang mit der Figur 1 erläuterten Verfahrensschritten.

Bei diesem Ausführungsbeispiel kann die Adresse des Gebührenrechners GS2 von dem ersten Kommunikationsendgerät KEG an den Verbindungsknoten GW übermittelt werden.

Besonders vorteilhaft ist bei dem beschriebenen Verfahren, dass bei der Vergebührung der Kommunikationsverbindung berücksichtigt wird, mit was für einem Kommunikationsnetz bzw. Zugangsnetz das Zielkommunikationsendgerät verbunden ist. Ist das Zielkommunikationsendgerät mit einem Mobilfunknetz verbunden, so läuft das Verfahren wie beschrieben ab, und der "Internetnutzer" in Form des ersten Kommunikationsendgerätes übernimmt - zumindest teilweise - die Gebühren für die Nutzung der Ressourcen des Mobilfunknetzes. Dies funktioniert vorteilhafterweise selbst dann, wenn das erste Kommunikationsendgerät nicht direkt, sondern über Zugangs- oder Zwischennetze mit dem Internet und dem Mobilfunknetz verbunden ist. Handelt es sich bei dem Zielkommunikationsendgerät jedoch um ein anderes Kommunikationsendgerät, welches z.B. direkt an das Internet angeschlossen ist (in den Figuren nicht dargestellt), so wird die Aufbauanforderungsnachricht über das Internet unmittelbar an das andere Kommunikationsendgerät geleitet, ohne dass ein Verbindungsknoten des Mobilfunknetzes oder ein Gebührenrechner beteiligt ist. In diesem Fall wird dem ersten Kommunikationsendgerät lediglich die übliche (z.B. zeit- oder volumenabhängige) Internetzugangsgebühr in Rechnung gestellt.

Die Aufbauanforderungsnachricht AF wird über ein kommunikationsverbindungsaufbausteuerndes Signalisierungssystem unter Nutzung des SIP-Protokolls übertragen. Aus diesem Grund verfügt sowohl das Kommunikationsendgerät KEG als auch das Ziel-Kommunikationsendgerät ZKEG über eine Einheit (einen sogenannten SIP-Client), die ein Senden, Empfangen und Verarbeiten von SIP-Nachrichten ermöglicht. Das Vergebührungsverfahren betreffende Informationen können vorteilhafterweise in den Headern der SIP-Nachrichten (SIP-Header) übertragen werden.

Es wurde ein Verfahren zum Vergebühren einer Kommunikationsverbindung beschrieben, wobei die Kommunikationsverbindung von einem Start-Kommunikationsendgerät über das Internet zu einem Zielkommunikationsendgerät eines Mobilfunknetzes aufgebaut wird. An einem Punkt des Zielkommunikationsnetzes, an dem Verbindungsknoten GW, wird die Gebührenpflichtigkeit der Kommunikationsverbindung erkannt und Verbindung zu einem für das Start-Kommunikationsendgerät zuständigen Gebührenrechner aufgenommen. Dies ermöglicht eine Vergebührung selbst solcher Kommunikationsverbindungen, die gegebenenfalls über mehrere Zugangsnetze oder Zwischennetze und über das öffentliche Internet zu einem Zielkommunikationsendgerät eines Mobilfunknetzes aufgebaut werden.

## Patentansprüche

1. Verfahren zum Vergebühren einer Kommunikationsverbindung (KV), die über das Internet (INET) zwischen einem ersten Kommunikationsendgerät (KEG) und einem mobilen Ziel-Kommunikationsendgerät (ZKEG) eines paketorientiert arbeitenden Mobilfunknetzes (MFN) aufgebaut wird, bei dem
- von dem ersten Kommunikationsendgerät (KEG) aus eine die Kommunikationsverbindung (KV) betreffende Aufbauforderungsnachricht (AF) über das Internet (INET) zu einem Netzknoten (GW) des Mobilfunknetzes (MFN) geleitet wird,
- von dem Netzknoten (GW) ein Gebührenrechner (GS1, GS2, GS3) ermittelt wird, von welchem das erste Kommunikationsendgerät (KEG) betreffende Gebühren-Zahlungsdaten gespeichert (M1) sind,
- von dem Netzknoten (GW) eine die Kommunikationsverbindung (KV) betreffende Gebührenanfrage (GA) an den Gebührenrechner (GS1, GS2, GS3) gesendet wird,
- von dem Gebührenrechner (GS1, GS2, GS3) überprüft wird, ob von Seiten des Kommunikationsendgerätes (KEG) die mobilfunknetzseitige Kommunikationsverbindung (KV) betreffende Gebühren übernommen werden,
- von dem Gebührenrechner (GS1, GS2, GS3) eine das Überprüfungsergebnis beinhaltende Antwortnachricht (AN) an den Netzknoten (GW) gesendet wird,
- bei positivem Überprüfungsergebnis in dem Mobilfunknetz (MFN) die Kommunikationsverbindung (KV) zu dem Ziel-Kommunikationsendgerät (ZKEG) aufgebaut wird, oder
- bei negativem Überprüfungsergebnis in dem Mobilfunknetz (MFN) der Aufbau der Kommunikationsverbindung (KV) abgebrochen wird.

2. Verfahren nach Anspruch 1,
**dadurch gekennzeichnet, dass**
als Netzknoten ein das Internet (INET) mit dem Mobilfunknetz (MFN) verbindender Verbindungsknoten (GW) verwendet wird.

3. Verfahren nach Anspruch 1 oder 2,
**dadurch gekennzeichnet, dass**
als Netzknoten ein Element (GW) eines verbindungsaufbausteuernden Datenpaketsteuerungssystems (IMS) verwendet wird.

4. Verfahren nach einem der vorhergehenden Ansprüche,
**dadurch gekennzeichnet, dass**
das erste Kommunikationsendgerät (KEG) über ein Internet-Zugangsnetz (ISP) mit dem Internet (INET) verbunden wird.

5. Verfahren nach Anspruch 4,
**dadurch gekennzeichnet, dass**
als Gebührenrechner ein Netz-Rechner (GS1) des Internetzugangsnetzes (ISP) verwendet wird.

6. Verfahren nach einem der Ansprüche 1 bis 4,
**dadurch gekennzeichnet, dass**
als Gebührenrechner ein Netz-Rechner (GS3) des Mobilfunknetzes (MFN) verwendet wird.

7. Verfahren nach einem der Ansprüche 1 bis 4,
**dadurch gekennzeichnet, dass**
als Gebührenrechner ein Internet-Rechner (GS2) des Internets (INET) verwendet wird.

8. Verfahren nach einem der vorhergehenden Ansprüche,
**dadurch gekennzeichnet, dass**
- mittels der Antwortnachricht (AN) die Information an den Netzknoten (GW) gesendet wird, dass seitens des ersten Kommunikationsendgerätes (KEG) sämtliche Gebühren übernommen werden, welche im Zusammenhang mit der Kommunikationsverbindung (KV) auftreten,
- diese Gebühren betreffende Gebührendaten bei dem Gebührenrechner (GS1, GS2, GS3) erfasst (M1) werden, und
- durch den Gebührenrechner (GS1, GS2, GS3) eine Gebührenzahlung von einem Betreiber des Kommunikationsendgerätes (KEG) an einen Betreiber des Mobilfunknetzes (MFN) veranlasst wird.

9. Verfahren nach einem der Ansprüche 1 bis 7,
**dadurch gekennzeichnet, dass**
- mittels der Antwortnachricht (AN) die Information an den Netzknoten (GW) gesendet wird, dass seitens des ersten Kommunikationsendgerätes (KEG) Gebühren, welche im Zusammenhang mit der Kommunikationsverbindung (KV) auftreten, bis zu einer vorgewählten Maximalhöhe übernommen werden,
- diese Gebühren betreffende Gebührendaten bei dem Gebührenrechner (GS1, GS2, GS3) erfasst (M1) werden, und
- durch den Gebührenrechner (GS1, GS2, GS3) eine Gebührenzahlung von einem Betreiber des Kommunikationsendgerätes (KEG) an einen Betreiber des Mobilfunknetzes (MFN) veranlasst wird.

10. Verfahren nach Anspruch 9,
**dadurch gekennzeichnet, dass**
- die Kommunikationsverbindung (KV) beendet wird, wenn eine mit den Gebührendaten erfasste Gebührenhöhe die Maximalhöhe erreicht.

11. Verfahren nach Anspruch 9,
**dadurch gekennzeichnet, dass**
- sobald eine mit den Gebührendaten erfasste Gebührenhöhe die Maximalhöhe erreicht, eine zusätzliche Gebührenzahlung veranlaßt wird und danach eine erneute, bei der Gebührenhöhe Null startende Erfassung (M1) der Gebührendaten begonnen wird.

12. Verfahren nach einem der Ansprüche 1 bis 7,
**dadurch gekennzeichnet, dass**
- mittels der Antwortnachricht (AN) die Information an den Netzknoten (GW) gesendet wird, dass seitens des ersten Kommunikationsendgerätes (KEG) ein Gebührenanteil der Gebühren übernommen wird, welche im Zusammenhang mit der Kommunikationsverbindung (KV) auftreten,
- diesen Gebührenanteil betreffende Gebührendaten bei dem Gebührenrechner (GS1, GS2, GS3) erfasst (M1) werden, und
- durch den Gebührenrechner (GS1, GS2, GS3) eine Gebührenzahlung von einem Betreiber des Kommunikationsendgerätes (KEG) an einen Betreiber des Mobilfunknetzes (MFN) veranlasst wird.

13. Verfahren nach einem der Ansprüche 8 bis 12,
**dadurch gekennzeichnet, dass**
- in einem Speicher (M2) des Mobilfunknetzes (MFN) weitere Gebührendaten erfasst werden, um bei der veranlassten Gebührenzahlung durch Vergleich der im Gebührenrechner erfassten (M1) Gebührendaten und der in dem Speicher (M2) des Mobilfunknetzes (MFN) erfassten weiteren Gebührendaten Gebührenzahlungsvorgänge zu überprüfen.

14. Verfahren nach einem der Ansprüche 8 bis 13,
**dadurch gekennzeichnet, dass**
bei der veranlassten Gebührenzahlung eine Aufteilung der Gebühren auf den Betreiber des Gebührenrechners (GS1, GS2, GS3) und den Betreiber des Mobilfunknetzes (MFN) durchgeführt wird.

15. Verfahren nach einem der vorhergehenden Ansprüche,
**dadurch gekennzeichnet, dass**
- vor dem Senden der Antwortnachricht (AN) von Seiten des Gebührenrechners (GS1, GS2, GS3) das Senden einer die Gebühren betreffenden Informationsnachricht (IN) an das erste Kommunikationsendgerät (KEG) veranlasst wird,
- seitens des ersten Kommunikationsendgeräts (KEG) der Empfang der Informationsnachricht (IN) mittels einer Bestätigungsnachricht (BN) bestätigt wird, und
- nach Eintreffen der Bestätigungsnachricht (BN) von Seiten des Gebührenrechners (GS1, GS2, GS3) die Antwortnachricht (AN) an den Netzknoten (GW) gesendet wird.

16. Verfahren nach Anspruch 15,
**dadurch gekennzeichnet, dass**
- zusammen mit der Informationsnachricht (IN) eine die Gebühren betreffende Wahlaufforderung an das erste Kommunikationsendgerät (KEG) gesendet wird,
- von Seiten des ersten Kommunikationsendgeräts (KEG) auf die Wahlaufforderung hin eine Auswahl getroffen wird, und
- Informationen über die getroffene Auswahl mittels der Bestätigungsnachricht (BN) an den Gebührenrechner (GS1, GS2, GS3) übertragen werden.
